# EUROPÄISCHE PATENTSCHRIFT

(11) **EP 0 927 210 B1**
(45) Veröffentlichungstag und Bekanntmachung des Hinweises auf die Patenterteilung: **21.06.2000**
(21) Anmeldenummer: 97919046.9
(22) Anmeldetag: 09.09.1997
(51) Int. Cl.: C08F 297/04

(54) **THERMOPLASTISCHE ELASTOMERE**
THERMOPLASTIC ELASTOMERS
ELASTOMERES THERMOPLASTIQUES

(30) Priorität: 19.09.1996 DE 19638254
(43) Veröffentlichungstag der Anmeldung: 07.07.1999
(73) Patentinhaber: BASF AKTIENGESELLSCHAFT, 67056 Ludwigshafen (DE)
(72) Erfinder: KNOLL, Konrad, D-67069 Ludwigshafen (DE); GAUSEPOHL, Hermann, D-67112 Mutterstadt (DE); NIESSNER, Norbert, D-67159 Friedelsheim (DE); NAEGELE, Paul, D-67166 Otterstadt (DE)
(86) Internationale Anmeldenummer: EP9704905
(87) Internationale Veröffentlichungsnummer: WO9812240

(56) Entgegenhaltungen:
- EP-A- 0 512 530
- DE-A- 4 420 952
- DE-A- 19 615 533
- US-A- 4 122 134
- H. MARK ET AL.: "Encyclopedia of polymer science & eng., vol.7, Ed. 2" 1987 , JOHN WILEY & SONS , NEW-YORK US XP002047487 siehe Seite 807 - Seite 817
- R. FAYT ET AL.: "Stability of co-continuous phase morphologies in emulsified polyethylene-polystyrene blends" POLYMERIC MATERIALS SCIENCE & ENG., Bd. 68, 1993, Seiten 178-179, XP002047486

## Beschreibung

Blockcopolymere von Vinylaromaten (z.B. Styrol) und Dienen (z.B. Butadien) sind Copolymere aus mehreren aneinandergereihten oder sonstwie verknüpften Polymermolekül-Bereichen (sog. Blöcken), die in sich mehr oder weniger einheitlich aufgebaut sind. Sie können je nach Struktur und Gehalt an Dienmonomeren - bei einer bestimmten Temperatur - insgesamt entweder elastomere, kautschukelastische oder steife, nicht-kautschukelastische Eigenschaften haben, d.h. sie verhalten sich nach außen hin insgesamt entweder ähnlich wie ein Polydien und haben z.B. als sog. SB-Rubber (Styrol-Butadien-Kautschuke) Bedeutung, oder wie transparente, schlagzähe Styrolpolymere. Es ist üblich, in Anlehnung an die Bezeichnungen beim schlagzäh modifizierten Polystyrol diejenigen Molekülteile, die das kautschukelastische Verhalten bestimmen, als Weichphase und die starren Molekülteile (den mehr oder minder reinen Polystyrolanteil) als Hartphase zu bezeichnen.

SB-Rubber müssen wie gewöhnliche Dienpolymere zum Gebrauch vulkanisiert werden, was ihre Verwendung stark einschränkt und die Verarbeitung verteuert. Ein Nachteil ist auch die geringe Alterungs- und Temperaturbeständigkeit, der zwar durch Hydrierung beseitigt werden kann, jedoch ebenfalls eine Verteuerung bedeutet.

Hydrierte Styrol-Butadien-Styrol- und Styrol-Isopren-Styrol-Dreiblockcopolymerisate mit einem Diengehalt von ca. 70% sind derzeit auch im Handel erhältlich (z.B. Kraton® G der Fa. Shell Inc. und Septon® der Fa. Kuraray). Dies sind ausgesprochen thixotrope Produkte, die bei kleinen Scherraten eine hohe Schmelzeviskosität aufweisen und sich daher ohne Hilfsmittel nur schwer im Spritzguß, durch Tiefziehen oder Kalandrieren verarbeiten lassen. Das übliche Hilfsmittel - Weißöl - verschlechtert aber die mechanischen Eigenschaften der Formteile und führt zu einer hohen Global-Migrationsrate, die die Verwendung der Formteile z.B. auf dem Lebensmittel- und Spielzeugsektor ausschließt.

Die Erfindung betrifft normalerweise transparente, rein thermoplastisch verarbeitbare hydrierte Styrol-Butadien-Blockcopolymere (Styrol und Butadien stellvertretend auch für deren technische Äquivalente) mit elastomerem Verhalten und besonderen mechanischen und verbesserten thermischen Eigenschaften, die durch anionische Polymerisation erhalten werden.

Die zu sog. lebenden Polymeren (living polymers) führende anionische Polymerisation, bei der das Wachstum eines Kettenmoleküls an einem Kettenende stattfindet, das mangels spontaner Kettenabbruch- oder -übertragungsreaktion theoretisch beliebig lange lebt (polymerisationsfähig bleibt) und die Umsetzung des lebenden Polymeren mit ein- oder mehrfunktionellen Reaktionspartnern bietet bekanntlich eine vielseitig verwendbare Möglichkeit zum Aufbau von Blockcopolymeren, wobei allerdings die Auswahl an Monomeren beschränkt ist; in der Praxis haben nur Blockcopolymere von vinylaromatischen Verbindungen, also Styrol und seinen technischen Äquivalenten einerseits und Dienen, im wesentlichen Butadien oder Isopren andererseits Bedeutung erlangt. Blockcopolymere erhält man dadurch, daß man jeweils bis zur Erschöpfung des Monomerenvcrrats polymerisiert und dann das Monomere wechselt. Dieser Vorgang ist mehrfach wiederholbar.

Lineare Blockcopolymere werden z.B. in den US-A-3 507 934 und 4 122 134 beschrieben. Sternförmige Blockcopolymere sind z.B. aus den US-A-4 086 298; 4 157 545 und 3 639 517 bekannt.

Das Eigenschaftsprofil dieser Blockcopolymeren wird wesentlich durch das einpolymerisierte Dienmonomere, d.h. Länge, Anordnung und Mengenverhältnis von Polydien- und Polystyrol-Blöcken bestimmt. Darüberhinaus spielt die Art und Weise des Übergangs zwischen unterschiedlichen Blöcken eine wichtige Rolle: Man kennt sog. scharfe und verschmierte (tapered) Übergänge, je nachdem, ob der Monomerenwechsel abrupt oder allmählich stattfindet. Bei verschmiertem Übergang tritt eine mehr oder weniger statistische Verteilung von Polydien- und Polystyrol-Sequenzlängen innerhalb eines bestimmten Kettensegments auf.

Blockcopolymere mit scharf getrennten Blöcken sind bei identischem Molekulargewicht und Dienanteil weniger zäh als solche mit verschmiertem Blockübergang. Will man zu zäheren Blockcopolymeren gelangen, wird man folglich Blockübergänge mit statistischer Sequenzlängenverteilung von Dien- und Styrolsegmenten im Übergangsbereich bevorzugen (vgl. US-A-4 122 134 und EP-A-0 316 671).

Die Erzielung verschmierter Blockübergänge durch gesteuerten Wechsel der Monomerenzugabe ist nun technisch aufwendig und führt zu einer längeren Reaktionsdauer bzw. geringerer Raum-Zeit-Ausbeute, was die Herstellungskosten erhöht. Im Grenzfall, der kontinuierlich gesteuerten Zugabe (vgl. US-A-4 346 198 und 4 248 984) nimmt die Umsetzungsdauer wegen der ungünstigen Lage der Copolymerisationsparameter von Vinylaromaten und Dienen extrem zu und man gewinnt nur Polymere mit inhomogener Verteilung der Butadien- und Vinylaromaten-Einheiten im Bereich des Blockübergangs, was sich wie eine Vermehrung der Zahl der Übergänge auswirkt. Deutlich wird dies durch eine niedrige Glastemperatur (T_{g} unterhalb von -50°C, vgl. US-A-4 346 198, Beispiel 1) und schlechte Verarbeitungseigenschaften.

Bei der morphologischen Untersuchung von Blockcopolymeren zeigt sich nun, daß bei verschmiertem Blockübergang die Sequenzlänge der reinen Dienphase gegenüber der Polystyrolphase und somit das Volumenverhältnis zugunsten der Dienphase verschoben ist.

Die Erfindung hat sich die Aufgabe gestellt, durch Schaffung einer geeigneten molekularen Struktur zu alterungs- und witterungsbeständigen elastomeren, also sich kautschukelastisch verhaltenden Blockcopolymeren von Vinylaromaten und Dienen, insbesondere Styrol zu gelangen, die großtechnisch einfach herstellbar sind, eine möglichst hohe Zähigkeit besitzen und ohne Verwendung von Hilfsmitteln wie Thermoplaste auf Extrudern und Spritzgußmaschinen einfach zu verarbeiten sind.

Erfindungsgemäß wird dies, allgemein ausgedrückt, dadurch möglich, daß man ein Styrol-Eutadien-Blockcopolymerisat hydriert, das aufgebaut ist aus Blöcken, die eine Hartphase (Blocktyp S) aus Styrol-Einheiten und solchen, die eine Weichphase (Blocktyp (B/S)) aus Butadien- und Styrol-Einheiten mit statistischer Verteilung der Butadien- und Styrol-Einheiten bilden. Der Aufbau kann dabei entlang der Kette im statistischen Mittel homogen oder inhomogen sein. Styrol und Eutadien stehen dabei, wie schon bemerkt, auch für deren jeweilige technische Äquivalente (Alkyl-, insbesondere Methyl-Styrole sowie Diphenylethylen bzw. Isopren und Dimethylbutadien).

Unmittelbarer Erfindungsgegenstand ist ein kautschukelastisches Blockcopolymerisat, das durch Hydrierung eines Styrol-Butadien-Blockcopolymerisats erhalten worden ist, das aus mindestens zwei, einpolymerisierte Einheiten des Styrols aufweisenden, eine Hartphase bildenden Blöcken S und mindestens einem einpolymerisierte Einheiten sowohl des Styrols wie des Butadiens aufweisenden elastomeren, eine Weichphase bildenden Block (B/S) besteht mit der Maßgabe, daß die Kettenenden eines Blockcopolymeren im wesentlichen jeweils von einem Block S gebildet werden, wobei die Glastemperatur T_{g} des Blocks S über 25°C und die des unhydrierten Blocks (B/S) unter 25°C liegt und das Phasenvolumen-Verhältnis der Blöcke S zu den Blöcken E/S so gewählt worden ist, daß der Anteil der Hartphase (Blöcke S) am gesamten Blockcopolymerisat 1 bis 40 Volumen-% und der Gewichtsanteil des Diens weniger als 50 Gew.-% beträgt.

Bevorzugte Formmassen werden erhalten durch Hydrierung eines Styrol-Butadien-Blockcopolymerisats, dessen Block S eine Glastemperatur T_{g} über 50°C und dessen Block (B/S) eine Glastemperatur Tg unter 5°C aufgewiesen hat.

In der Formmasse kann als weitere Weichphase ein nicht hydriertes kautschukelastisches Styrol-Butadien-Copolymerisat in untergeordneter Menge vorhanden sein.

Weitere bevorzugte Formmassen werden durch Hydrierung
- eines Copolymerisats mit statistischer Verteilung der Comonomeren in mindestens einem Block,
- eines Blockpolymerisats, wie es durch anionische Polymerisation erhalten wird, wenn mindestens die Polymerisation des weichen Blocks (B/S) in Gegenwart eines polaren Cosolvens vorgenommen worden ist,
- eines Blockcopolymerisats mit mehreren Blöcken (B/S) mit unterschiedlicher Molmasse je Molekül, oder
- eines Blockcopolymerisats mit mehreren Blöcken S mit unterschiedlicher Molmasse je Molekül,
erhalten.

Man erhält ein erfindungsgemäß witterungs- und alterungsbeständiges, hoch fließfähiges kautschukelastisches Blockcopolymerisat dadurch, daß im Rahmen der vorstehenden Parameter die Weichphase (B/S) aus einen statistischen Copolymerisat von Styrol (der vinylaromatischen Verbindung) mit Butadien (dem Dien) gebildet wird; statistische Copolymerisate von Vinylaromaten und Dienen erhält man durch Polymerisation entweder nach einem Vorschlag in der deutschen Patentanmeldung P 44 20 952.5 durch Zusatz von polaren, koordinierenden Lösungsmitteln oder in Gegenwart eines in unpolaren Lösungsmitteln löslichen Kaliumsalzes. Die statistische Copolymerisation von Styrol und Butadien gelingt z.B. nach S.D.Smith et al., A. Ashraf et al. (Polymer Preprints 34(2), 672 (1993) und 35(2), 466 (1994) dadurch, daß Kalium-2,3-dimethyl-3-pentanolat oder Kalium-3-ethyl-3-pentanolat als Kaliumsalz verwendet werden.

Der Unterschied der beiden Methoden besteht darin, daß das Verhältnis der 1,2- zu 1,4-Verknüpfungen des Diens in Gegenwart einer geeigneten Konzentration des Kaliumsalzes (Lithium-Kalium-Verhältnis größer als 25:1) in einem nicht-polaren Lösungsmittel unter 11 % bleibt, bezogen auf die Summe von 1,2-Vinyl- und 1,4-cis- und trans-Mikrostruktur, während in Gegenwart eines polaren Cosolvens dieser Anteil höher liegt. Bei mit Butyllithium initiierter Polymerisation in Cyclohexan soll das Molverhältnis von Lithium zu Kalium bei etwa 10 zu 1 bis 40 zu 1, bei besonders geringem Anteil an 1,2-Verknüpfungen etwa 25 zu 1 bis 40 zu 1 liegen. Soll entlang des Butadien/Styrol-Blocks mit ansonsten statistischer Verteilung von Butadien und Styrol ein Zusammensetzungsgradient erreicht werden, so soll ein Li/K-Verhältnis oberhalb von etwa 40 zu 1 gewählt werden, wenn der Gradient sich von Butadien nach Styrol ändern soll; bei einem Gradienten von Styrol nach Butadien soll umgekehrt ein Li/K-Verhältnis unter 10 zu 1 gewählt werden.

Ein für die erfindungsgemäße Hydrierung geeignetes Ausgangsmaterial (Styrol-Butadien-Blockcopolymerisat) kann z.B. durch eine der nachstehenden allgemeinen Formeln 1 bis 11 dargestellt werden:

(1) (S-(B/S))ₙ₊₁;

(2) (S-(B/S))n-S;

(3) (B/S)-(S-(B/S))ₙ;

(4) X-[(S-(B/S))ₙ]ₘ₊₁;

(5) X-[((B/S)-S)ₙ]ₘ₊₁;

(6) X-[(S-(B/S))ₙ-S]ₘ₊₁;

(7) X-[((B/S)-S)ₙ-(B/S)]ₘ₊₁;

(8) Y-[(S-(B/S))ₙ]ₘ₊₁;

(9) Y-[((B/S)-S)ₙ]ₘ₊₁;

(10) Y-[(S-(B/S))ₙ-S]ₘ₊₁;

(11) Y-[((B/S)-S)ₙ-(B/S)]ₘ₊₁;

wobei S für den vinylaromatischen (Styrol-)Block und (B/S) für die Weichphase, also den statistisch aus Butadien- und Styrol-Einheiten aufgebauten Block steht, X den Rest eines n-funktionellen Initiators, Y den Rest eines m-funktionellen Kopplungsmittels und m und n natürliche Zahlen von 1 bis 10 bedeuten.

Bevorzugt ist ein Blockcopolymerisat einer der allgemeinen Formeln
S-(B/S)-S (entsprechend der Formel (2) mit n = 1);
X-[(B/S)-S]₂ (entsprechend der Formel (5) mit m = n = 1); sowie
Y-[(B/S)-S]₂ (entsprechend der Formel (9) mit m = n = 1).

Bevorzugt ist ein Blockcopolymerisat, dessen Weichphase (B/S) unterteilt ist in Blöcke

(12) (B/S)ₐ-(B/S)_{b};

(13) (B/S)ₐ-(B/S)_{b}-(B/S)ₐ;

(14) (B/S)ₐ-(B/S)_{b}-(B/S)_{c};

wobei, a, b, c... jeweils verschieden zusammengesetzte Blöcke bedeutet, d.h. deren Styrol/Butadien-Verhältnis unterschiedlich sein oder sich innerhalb eines Elocks ändern, insbesondere zunehmen kann, d.h. für drei unterschiedliche Teilblöcke (B/S)ₐ, (B/S)_{b} und (B/S)_{c} würde z.B. gelten: (S:B)ₐ < (S:B)_{b} < (S:B)_{c}.

Besonders bevorzugt ist ein Styrol-Butadien-Blockcopolymerisat, dessen Weichphase in zwei oder mehr gleiche Blöcke (B/S)ₐ₁, (B/S)ₐ₂, (B/S)ₐ₃ ... unterteilt ist.

Ein Blockcopolymerisat, das mehrere Blöcke (B/S) und/oder S mit unterschiedlicher Molmasse je Molekül aufweist, ist ebenfalls bevorzugt.

Die vorstehend beschriebenen Blockcopolymerisate werden erfindungsgemäß hydriert, d.h. die vom Einbau des Diens herrührenden olefinischen Doppelbindungen werden entfernt, sodaß im wesentlichen ein Ethen-Buten-Styrol-Copolymerisat gebildet wird, wobei das Ethen-Buten-Verhältnis in leicht einsehbarer Weise durch das Verhältnis vorhandener 1,2- zu 1,4-Mikrostrukturen bestimmt wird. Polymerisate mit einem hohen Ethen-Buten-Verhältnis, wie sie z.B. durch Polymerisation in Gegenwart von Kaliumsalzen entstehen, haben einen kristallinen Anteil, zugeordnet den Polymersegmenten, die einem Polyethylen entsprechen. Diese Polymerisate sind steifer als die mittels polaren Cosolventien erhältlichen mit gleichem Blockaufbau, aber niedrigerem Ethen-Buten-Verhältnis.

Man kann für experimentelle Zwecke mit einem in situ hergestellten Katalysator bei einem Wasserstoffdruck von z.B. 5 bis 50, bevorzugt 10 bis 20 bar bei etwa 100 bis 200°C hydrieren. Typischerweise werden hierfür Nickeloktanoat oder Nickelacetylacetonat in Toluol mit Aluminiumalkyl zu kolloidalem Nickel reduziert. Man gibt die Nickelsuspension zum gelösten Polymerisat, das deaktiviert sein kann, aber nicht muß. Die Umsetzung nimmt im Laborversuch je nach Temperatur z.B. 10 bis 20 Stunden in Anspruch; man kann das Fortschreiten z.B. jodometrisch an einer Probe verfolgen und die gefundenen Werte später für den technischen Betrieb benutzen.

Um ein z.B. im Lebensmittelbereich verwendbares Produkt zu erhalten, empfiehlt sich die Hydrierung an einem trägergebundenen, besonders bevorzugt kontinuierlich an einem fest in einem Turm angeordneten Katalysator.

Die erhaltenen erfindungsgemäßen thermoplastischen Elastomeren eignen sich hervorragend zur Herstellung von kautschukelastischen Formteilen mit den üblichen Methoden der Thermoplastverarbeitung, z.B. zu Folien, Schaum, Thermoformlingen, Spritzgußformlingen oder Profilextrudat.

Bevorzugt als vinylaromatische Verbindung im Sinne der Erfindung ist Styrol und ferner α-Methylstyrol und Vinyltoluol sowie Mischungen dieser Verbindungen. Bevorzugte Diene sind Butadien und Isopren, ferner Piperylen, 1-Phenylbutadien sowie Mischungen dieser Verbindungen.

Eine besonders bevorzugte Monomerkombination ist Butadien und Styrol. Alle in dieser Beschreibung verwendeten und insbesondere die nachstehenden Gewichts- und Volumenangaben beziehen sich auf die Kombination von Butadien und Styrol; bei Verwendung der technischen Äquivalente von Styrol und Butadien ("Styrolmonomer" und "Dienmonomer") sind die Angaben entsprechend umzurechnen.

Der (B/S)-Block wird aus 75 bis 30 Gew.-% Styrolmonomer und 25 bis 70 Gew.-% Dienmonomer aufgebaut. Besonders bevorzugt hat ein Weichblock einen Dienanteil zwischen 35 und 70 % und einen Styrolanteil zwischen 65 und 30 %.

Der Gewichtsanteil des Diens im gesamten Blockcopolymer liegt im Falle der Monomerkombination Styrol/Butadien bei 15 bis 65 Gew.-%, derjenige des Styrolmonomeren entsprechend bei 85 bis 35 Gew.-%. Besonders bevorzugt sind Butadien-Styrol-Blockcopolymere mit einer Monomerzusammensetzung aus 25 bis 60 Gew.-% Butadien und 75 bis 40 Gew.-% Styrolmonomeren.

Die Blockpolymeren werden durch anionische Polymerisation in einem unpolaren Lösungsmittel hergestellt, wobei die Initiierung mittels metallorganischer Verbindungen erfolgt. Bevorzugt sind Verbindungen der Alkalimetalle, besonders des Lithiums. Beispiele für Initiatoren sind Methyllithium, Ethyllithium, Propyllithium, n-Butyllithium, sek-Butyllithium und tert-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymeren, liegt aber in der Regel im Bereich von 0.002 bis 5 Mol-% , wenn man sie auf die Monomeren bezieht. Als Lösungsmittel werden bevorzugt (cyclo)aliphatische Kohlenwasserstoffe wie Cyclohexan oder Methylcyclohexan verwendet.

Erfindungsgemäß werden die statistischen, gleichzeitig Styrolmonomer und Butadien enthaltenden Blöcke der Blockcopolymeren unter Zusatz eines im Reaktionsgemisch löslichen Kaliumsalzes, insbesondere eines Kaliumalkoholates hergestellt. Es genügt schon eine kleine Menge Kaliumionen, im allgemeinen 2 bis 10 mol%, bezogen auf die Lithiummenge, um den erfindungsgemäßen statistischen Einbau von Styrol und Butadien zu bewirken.

Als Alkoholate eignen sich vor allem die Kaliumsalze von tertiären Alkoholen mit mindestens 7 Kohlenstoffatomen. Typische Alkohole sind z.B. 3-Ethyl-3-pentanol und 2,3-Dimethyl-3-pentanol. Als besonders geeignet erwies sich Tetrahydrolinalool (= 3,7-Dimethyl-3-oktanol). Geeignet sind neben Kaliumalkoholaten auch andere Kaliumsalze, die sich gegenüber Metallalkylen inert verhalten. Zu nennen sind Kaliumsalze von Dialkylamiden, alkylierten Diarylamide, Alkylthiolaten und alkylierten Arylthiolate.

Wichtig ist der Zeitpunkt, zu dem das Kaliumsalz dem Reaktionsmedium zugegeben wird. Üblicherweise werden zumindest Teile des Lösungsmittels und das Monomer für den ersten Block im Reaktionsgefäß vorgelegt. Um zu vermeiden, daß das Kaliumsalz durch Spuren an protischen Verunreinigungen zumindest teilweise zu KOH und Alkohol hydrolysiert wird, sollte zuerst das Lithiumorganyl zugegeben und eingemischt werden, dann erst das Kaliumsalz. Ist der erste Block ein Homopolymerisat, empfiehlt es sich, das Kaliumsalz erst kurz vor der Polymerisation des statistischen Blocks hinzuzufügen, d.h. nach dem Wechsel des Monomerengemisches.

Das Kaliumalkoholat kann aus dem entsprechenden Alkohol leicht durch Rühren einer Lösung des Alkohols in Cyclohexan in Gegenwart von überschüssiger Kalium-Natrium-Legierung oder, bei einer Temperatur oberhalb des Schmelzpunktes von Kalium (d.h. 64°C), in Gegenwart von reinem Kalium hergestellt werden. Bei 25°C ist die Wasserstoffentwicklung und damit die Umsetzung nach 24 Stunden beendet. Die Umsetzung kann aber bei 80°C (Kochen am Rückfluß) auf wenige Stunden verkürzt werden. Alternativ bietet sich an, den lösliche Kaliumsalze bildenden tertiären Alkohol mit einem geringen Überschuß eines Alkoholats wie Kaliummethylat, Kaliumethylat oder Kalium-tert.butylat in Gegenwart eines hochsiedenden Lösungsmittels wie Dekalin oder Ethylbenzol zu versetzen, den niedersiedenden Alkohol abzudestillieren und den Rückstand mit Cyclohexan aufzunehmen. Das überschüssige Spenderalkoholat kann dann abfiltriert werden.

Das Verhältnis der 1,2-Verknüpfungen zur Summe aus 1,2- und 1,4-Verknüpfungen des Diens, wie es sich bei anionischer Polymerisation von reinem Butadien bildet, wird durch Kaliumalkoholat (bei einem Li/K-Verhältnis über 30) maximal um 1 bis 2 % erhöht und liegt dann erfahrungsgemäß zwischen etwa 9 und 11 %.

Die Polymerisationstemperatur kann zwischen etwa 0 und 130°C betragen. Bevorzugt wird der Temperaturbereich zwischen 30 und 100°C.

Für die mechanischen Eigenschaften der erfindungsgemäßen Styrol-Butadien/Styrol-Blockcopolymerisate ist der Volumenanteil der Weichphase im Festkörper von entscheidender Bedeutung. Erfindungsgemäß liegt der Volumenanteil der aus Butadien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke S bilden die Hartphase, deren Volumenanteil entsprechend 5 bis 40, bevorzugt 10 bis 30 und besonders bevorzugt 10 bis 20 Vol.-% ausmacht.

Es ist darauf hinzuweisen, daß zwischen den oben erwähnten Mengenverhältnissen von vinylaromatischer Verbindung und Dien, den vorstehend angegebenen Grenzwerten der Phasenvolumina und der Zusammensetzung, die sich aus den erfindungsgemäßen Bereichen der Glastemperatur ergibt, keine strenge Übereinstimmung besteht, da es sich um jeweils auf volle Zehnerstellen gerundete Zahlenwerte handelt. Dies könnte vielmehr nur zufällig der Fall sein.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymeren läßt sich auch aus den eingesetzten Monomermengen berechnen, wenn man jedesmal vollständig auspolymerisieren läßt. Dabei kann man von der Annahme ausgehen, daß die Dichte der Monomereinheiten für Styrolmonomere und Dienmonomere identisch ist.

Im Sinne der Erfindung eindeutig definiert wird das Blockcopolymere durch den Quotienten aus dem Volumenanteil in Prozent der aus den (B/S)-Blöcken gebildeten Weichphase und dem Anteil an Dieneinheiten in der Weichphase, der für die Kombination Styrol/ Butadien zwischen 25 und 70 Gew.-% liegt.

Durch die den statistischen Einbau der vinylaromatischen Verbindungen in den Weichblock des Blockcopolymeren und die Verwendung von Kaliumalkoholat während der Polymerisation wird die Glasübergangstemperatur (Tg) beeinflußt. Sie liegt typischerweise zwischen -50 und +25°C, bevorzugt -50 bis +5°C. Da 1,2-Polybutadien eine um 70 bis 90°C höhere Glasübergangstemperatur als 1,4-Polybutadien hat, liegt bei den erfindungsgemäßen, in Gegenwart von Kalium erhaltenen statistischen Copolymeren die Glasübergangstemperatur durchschnittlich um 2 bis 5°C niedriger als bei den entsprechenden Lewis-Base-Produkten, die einen höheren Anteil an 1,2-Butadien-Verknüpfungen aufweisen.

Das Molekulargewicht des Blocks S liegt i.a. zwischen 1000 und 200 000, bevorzugt zwischen 3 000 und 80 000 [g/mol]. Innerhalb eines Moleküls können S-Blöcke unterschiedliche Molmasse haben.

Das Molekulargewicht des Blocks (B/S) liegt üblicherweise zwischen 2 000 bis 250 000 [g/mol], bevorzugt werden Werte zwischen 5 000 bis 150 000 [g/mol].

Auch ein Block (B/S) kann wie Block S innerhalb eines Copolymermoleküls unterschiedliche Molekulargewichtswerte einnehmen.

i Das Kupplungszentrum X wird durch die Umsetzung der lebenden anionischen Kettenenden mit einem mindestens bifunktionellen Kupplungsagens gebildet. Beispiel für derartige Verbindungen sind in den US-A-3 985 830, 3 280 084, 3 637 554 und 4 091 053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde wie Terephthalaldehyd und Ester wie Ethylformiat, Ethylacetat oder Ethylbenzoat geeignet.

Bevorzugte Polymerstrukturen sind S-(B/S)-S, X-[(B/S)-S]₂ und Y-[(B/S)-S]₂, wobei der statistische Block (B/S) selbst wieder in Blöcke (B₁/A₁)-(B₂/S₂)-(B₃/S₃)-... unterteilt sein kann. Bevorzugt besteht der statistische Block aus 2 bis 15 , besonders bevorzugt aus 3 bis 10 Teilblöcken. Die Aufteilung des statistischen Blocks (B/S) in möglichst viele Teilblöcke bietet den entscheidenden Vorteil, daß auch bei einem Gradienten der Zusammensetzung innerhalb eines Teilblocks, wie er sich in der anionischen Polymerisation unter praktischen Bedingungen nur schwer vermeiden läßt (s.u.), sich der (B/S)-Block insgesamt wie ein nahezu perfektes statistisches Polymer verhält. Es bietet sich deshalb an, weniger als die theoretische Menge an Kaliumalkoholat zuzusetzen. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden (B/S)-Blöcke eine Restzähigkeit behält und nicht vollständig versprödet.

Die erfindungsgemäßen Blockcopolymeren besitzen ein dem Weich-PVC sehr ähnliches Eigenschaftsspektrum, können jedoch vollkommen frei von migrationsfähigen, niedermolekularen Weichmachern hergestellt werden. Sie sind unter den üblichen Verarbeitungsbedingungen (180 bis 220°C) gegen Vernetzung stabil. Die hohe Stabilität der erfindungsgemäßen Polymisaten gegen Vernetzung kann durch Rheographie der Schmelze eindeutig belegt werden. Die Versuchsanordnung entspricht derjenigen einer MVR-Messung. Bei konstanter Flußrate wird der Druckanstieg in Abhängigkeit von der Zeit aufgezeichnet. Die erfindungsgemäßen Polymeren zeigen selbst nach 20 min. bei 250°C keinen Druckanstieg und ergeben einen glatten Schmelzestrang.

Die erfindungsgemäßen Blockcopolymeren zeichnen sich ferner durch eine hohe Sauerstoffpermeation P_{O} und Wasserdampfpermeation P_{W} von über 2 000 [cm³· 100 mm/m²·d·bar] bzw. über 10 [g 100 mm/m²·d·bar] aus, wobei P_{O} die Sauerstoffmenge in cm³ bzw. P_{W} die Wasserstoffmenge in Gramm angibt, die durch 1 m² Folie mit einer Normdicke von 100 mm je Tag (d) und je bar Partialdruckdifferenz hindurchtreten.

Eine hohe Rückstellkraft bei Deformation, so wie man sie bei thermoplastischen Elastomeren beobachtet, eine hohe Transparenz (über 90% bei 10 mm Schichtdicke), eine niedrige Verschweißtemperatur von weniger als 120°C und ein breiter Schweißbereich (über 5°C) bei einer moderaten Klebrigkeit machen die erfindungsgemäßen Blockcopolymeren zu einem geeigneten Ausgangsmaterial für die Herstellung von sogenannten Dehn- oder Stretchfolien, Infusionsschläuchen und anderen extrudierten, spritzgegossenen, thermogeformten oder blasgeformten Fertigteilen, für die hohe Transparenz und Zähigkeit verlangt werden, insbesondere für Anwendungen im Bereich der Medizintechnik.

Die Polymerisation wird mehrstufig durchgeführt und bei monofunktioneller Initiierung z.B. mit der Herstellung des Hartblocks S begonnen. Ein Teil der Monomeren wird im Reaktor vorgelegt und die Polymerisation durch Zugabe des Initiators gestartet. Um einen definierten, aus der Monomer- und Initiatordosierung berechenbaren Kettenaufbau zu erzielen, ist es empfehlenswert, den Prozeß bis zu einem hohen Umsatz (über 99%) zu führen, bevor die zweite Monomerzugabe erfolgt. Zwingend erforderlich ist dies jedoch nicht.

Die Abfolge der Monomerzugabe richtet sich nach dem gewählten Blockaufbau. Bei monofunktioneller Initiierung wird z.B. zuerst die vinylaromatische Verbindung entweder vorgelegt oder direkt zudosiert. Anschließend wird eine Cyclohexanlösung des Kaliumalkoholats zugegeben. Danach sollten Butadien und Styrol möglichst gleichzeitig zugegeben werden. Durch das Mengenverhältnis von Butadien zu vinylaromatischer Verbindung, die Konzentration des Kaliumsalzes sowie die Temperatur wird der statistische Aufbau und die Zusammensetzung des Blocks (B/S) bestimmt. Erfindungsgemäß nimmt das Butadien relativ zur Gesamtmasse einschließlich vinylaromatischer Verbindung einen Gewichtsanteil von 25% bis 70% ein. Anschließend kann Block S durch Zugabe des Vinylaromaten anpolymerisiert werden. Außerdem können die Polymerblöcke auch durch die Kopplungsreaktion miteinander verbunden werden. Im Falle der bifunktionellen Initiierung wird zuerst der (B/S)-Block aufgebaut, gefolgt vom S-Block.

Die weitere Aufarbeitung erfolgt nach den üblichen Verfahren. Es empfiehlt sich, dabei in einem Rührkessel zu arbeiten und mit einem Alkohol wie Isopropanol die Carbanionen zu protonieren, vor der weiteren Aufarbeitung in üblicher Weise mit CO₂/Wasser schwach sauer zu stellen, das Polymer mit einem Oxidationsinhibitor und einem Radikalfänger (handelsübliche Produkte wie Trisnonylphenylphosphit (TNPP) oder α-Tocopherol (Vitamin E) bzw. unter dem Handelsnamen Irganox® 1076 oder Irganox 3052 der Ciba-Geigy, Basel erhältliche Produkte) zu stabilisieren, das Lösungsmittel nach den üblichen Verfahren zu entfernen, zu extrudieren und zu granulieren. Das Granulat kann wie andere Kautschuksorten mit einem handelsüblichen Antiblockmittel wie Acrawax®, Besquare® oder Aerosil® gegen Verkleben geschützt werden.

Die Hydrierung der Blockcopolymeren kann nach den für Umsetzungen an Polymeren einerseits und für die Hydrierung olefinischer Doppelbindungen andererseits üblichen Regeln geschehen, die allgemein bekannt sind.

Zu Versuchszwecken wird eine Lösung des Hydrierkatalysators bequem wie folgt hergestellt: Zu einer 1%igen Lösung von Nickel-acetylacetonat in Toluol wird bei Zimmertemperatur eine 20 %ige Lösung von Aluminiumtriisobutyl in Hexan gegeben, wobei das Gewichtsverhältnis von Nickelacetylacetonat zu Triisobutylaluminium im Bereich von 1:4 liegt. Nach Abklingen der schwach exothermen Reaktion wird die frische Katalysatorlösung zur Polymerlösung gegeben und mit Wasserstoff beaufschlagt. Pro kg Polymer sind 1,5 g (0,15 Gew.%) Nickel-acetylacetonat ausreichend; wenn das Reaktionsgemisch besonders rein ist, genügen schon 0,15 g. Die erzielbare Hydriergeschwindigkeit hängt von Katalysatorkonzentration, Wasserstoffdruck und Reaktionstemperatur ab. Angestrebte Hydriergrade von über 95 % werden bei 15 bar Wasserstoffpartialdruck und Temperaturen zwischen 180 und 200°C schon nach 30 bis 120 Minuten erreicht. Bei Temperaturen um 120°C dauert die Hydrierung 8 bis 16 Stunden. Voraussetzung für eine gute Raum-Zeit-Ausbeute ist eine gute Einmischung des Wasserstoffgases. Hierfür wird ein wirksamer Rührer mit guter vertikaler Durchmischung benötigt, der außerdem Oberfläche schafft, damit das Gas in Lösung gehen kann. Sehr geeignet sind hierfür sogenannte Begasungsrührer. Nach Beendigung der Hydrierung kann das kolloidal verteilte Nickel, welches die Polymerlösung schwarz färbt, unter Entfärbung mit einer Wasserstoffperoxid-Essigsäure-Mischung aufoxidiert werden.

Die Hydrierung kann - insbesondere im technischen Maßstab - selbstverständlich auch mit anderen homogenen und heterogenen Hydrierkatalysatoren durchgeführt werden. Besonders interessant ist die Hydrierung am Festbettkatalysator, weil eine Verunreinigung des Polymeren durch Katalysatorrückstände vermieden wird.

Es empfiehlt sich, das hydrierte Polymere mit einem Oxidationsinhibitor und einem Radikalfänger (handelsübliche Produkte wie Trisnonylphenylphosphit (TNPP) oder α-Tocopherol (Vitamin E), z.B. unter der Handelsbezeichnung Irganox® 1076 oder Irganox 3052 erhältliche Produkte) und ggf. einem UV-Stabilisator zu stabilisieren, das Lösungsmittel nach den üblichen Verfahren zu entfernen, zu extrudieren und zu granulieren. Das Granulat kann wie andere Kautschuksorten mit einem Antiblockmittel, z.B. einem Handelsprodukt wie Acrawax®, Besquare® oder Aerosil® gegen Verkleben geschützt werden. Insgesamt genügen sehr viel kleinere Mengen an Additiv im Vergleich zu den unhydrierten Produkten, da die intrinsische Stabilität durch die Hydrierung zunimmt und die Verklebeneigung abnimmt.

### Beispiele

### A) Herstellung der Block-Copolymeren

Die benötigten Block-Copolymeren wurden jeweils in einem simultan heiz- und kühlbaren 50 l-Edelstahlautoklaven, der mit einem Kreuzbalkenrührer ausgerüstet und durch Spülen mit Stickstoff, Auskochen mit einer Lösung von sec-Butyllithium und 1,1-Diphenylethylen (Molverhältnis 1:1) in Cyclohexan und Trocknen vorbereitet war hergestellt.

Dazu wurden jeweils 22,8 l Cyclohexan eingefüllt und die in der Tabelle 1 angegebenen Mengen an Initiator, Tetrahydrofuran und Monomeren zugesetzt. Angegeben ist auch die Polymerisationsdauer, Anfangs- und Endtemperatur, wobei die Monomerzulaufszeit stets klein gegenüber der Polymerisationszeit war.

Die Temperatur des Reaktionsgemisches wurde je nach Bedarf durch Heizung oder Kühlung des Reaktormantels gesteuert. Nach Umsetzungsende (Verbrauch der Monomeren) wurde gegebenenfalls mit dem jeweils angegebenen Kopplungsmittel bis zur Farblosigkeit umgesetzt (titriert) und mit einem 1,5-fachen Überschuß an Ameisensäure sauer gestellt. die erhaltenen Lösungen wurden unmittelbar, ohne Zusatz von Stabilisatoren oder andere Weiterverarbeitungsschritte verwendet.

### B) Hydrierung

Zu 250 ml einer 1,136 gew.%igen Lösung von Nickelacetylacetonat in Toluol werden bei Zimmertemperatur 50 ml einer 20 %igen Lösung von Aluminiumtriisobutyl in Hexan gegeben, sodaß das Gewichtsverhältnis von Nickelacetylacetonat zu Triisobutylaluminium im Bereich von 1:4 liegt. Nach Abklingen der schwach exothermen Reaktion wird die frische Katalysatorlösung zu 13,3 kg einer 15 gew.%igen Polymerlösung gegeben und mit 15 bar Wasserstoff beaufschlagt. Unter Rühren wird der Kesselinhalt auf 120°C aufgeheizt. Nach 8 Stunden ist ein Hydriergrad von 95 % erreicht, nach 16 Stunden von 98 %. Der Hydriergrad wird durch Wijs-Titration einer Probe der hydrierten im Verhältnis zur unhydrierten Lösung ermittelt. Nach Beendigung der Hydrierung wird zu der schwarzen Lösung bei 70°C ein Gemisch aus 12 ml Wasserstoffperoxid, 2,5 ml Ameisensäure und 50 ml Wasser gegeben. Der Kesselinhalt wird sofort nach Zugabe farblos. Die Lösung wird auf einem Entgasungsextruder vom Lösungsmittel befreit und granuliert.

Für die mechanischen Messungen wurden 2 mm dicke Platten gepreßt (200°C, 3 min) und Normprüfkörper ausgestanzt.

**Tabelle 1:**

| Polymerisation und Analytik linearer S-SB-S-Blockcopolymerer bzw. (Beispiele 3 und 6) Sternblockcopolymerer [S-(S/B)]X | | | | | | |
|---|---|---|---|---|---|---|
| Beispiel Nr. | 1 | 2 | 3 | 4 | 5 | 6 |
| s-BuLi [mmol] | 87,3 | 174,6 | 261,9 | 87,3 | 174,6 | 261,9 |
| Styrol 1 [g] | 1048 | 2096 | 2096 | 1048 | 2096 | 2096 |
| T_{A}/T_{E} [°C] | 40/70 | 30/75 | 30/75 | 40/75 | 30/75 | 30/75 |
| Zeit [min] | 30 | 25 | 20 | 15 | 12 | 10 |
| K-Salz [mmol] | 4,37 | 4,37 | 4,37 | - | - | - |
| Li:K-Verhältnis | 20:1 | 20:1 | 20:1 | | | |
| Butadien 1 [g] | 1172 | 1172 | 1172 | 1172 | 1172 | 1172 |
| Styrol 2 [g] | 1477 | 1477 | 1477 | 1477 | 1477 | 1477 |
| T_{A}/T_{E}[°C] | 52/75 | 52/75 | 52/75 | 50/75 | 50/77 | 52/78 |
| Zeit [min] | 13 | 10 | 10 | 12 | 10 | 10 |
| Butadien 2 [g] | 1172 | 1172 | 1172 | 1172 | 1172 | 1172 |
| Styrol 3 [g] | 1477 | 1477 | 1477 | 1477 | 1477 | 1477 |
| T_{A}/T_{E}[°C] | 55/76 | 50/71 | 50/72 | 50/72 | 50/73 | 50/74 |
| Zeit [min] | 13 | 10 | 10 | 13 | 11 | 11 |
| Butadien 3 [g] | 1172 | 1172 | 1172 | 1172 | 1172 | 1172 |
| Styrol 4 [g] | 1477 | 1477 | 1477 | 1477 | 1477 | 1477 |
| T_{A}/T_{E}[°C] | 54/75 | 50/70 | 50/71 | 52/74 | 50/73 | 50/73 |
| Zeit [min] | 17 | 14 | 12 | 15 | 13 | 12 |
| Styrol 5 [g] | 1148 | - | - | 1148 | - | - |
| T_{A}/T_{E}[°C] | 70/72 | - | - | 70/72 | - | - |
| Zeit [min] | 40 | - | - | 20 | - | - |
| Kopplungsmittel | | 6,46^{a)} | 21,34^{b)} | | 6,46^{a)} | 21,34^{b)} |
| Mₙ [g/mol·10⁻³] | 130 | 121 | 90 | 116 | 105 | 85 |
| Mₚ [g/mol·10⁻³] | 150 | 151 | - | 158 | 157 | - |
| M_{w} [g/mol·10⁻³] | 166 | 150 | 175 | 180 | 166 | 177 |
| T_{g} [°C] ^{c)} vor Hydrierung | -45/0 | -45/0 | -45/0 | -32/-2 | -32/-2 | -32/- 2 |
| | 50/90 | 50/90 | 50/90 | 50/90 | 50/90 | 50/90 |
| T_{g} [°C] ^{c)} nach Hydrierung | -17/-7 | -17/-7 | -17/-7 | -36/-11 | -36/-11 | -36/-11 |
| | - | - | - | 50/90 | 50/90 | 50/90 |
| Schmelzpeak PE | 56 hoch | 56 hoch | 56 hoch | 100 niedrig | 100 niedrig | 100niedrig |

| | | | | | | |
|---|---|---|---|---|---|---|
| a) Ethylformiat; | | | | | | |
| b) Edenol B 316 (Henkel) | | | | | | |
| c) es handelt sich um 2 jeweils über den angegebenen Bereich verlaufende Glasübergangsstufen, die vermutlich den chemisch unterschiedlichen Polymerbezirken zugeordnet werden können. | | | | | | |

**Tabelle 2:**

| Mechanische Eigenschaften (alle Werte in [N/mm²]) | | | | | | |
|---|---|---|---|---|---|---|
| Beispiel | 1 | 2 | 3 | 4 | 5 | 6 |
| vor der Hydrierung | | | | | | |
| Streckspannung | 1,5 | 1,5 | 1,4 | 1,4 | 1,3 | 1,3 |
| Bruchspannung | 21,4 | 20,1 | 18,3 | 20,5 | 19,2 | 18,0 |
| Bruchdehnung (%) | 801 | 875 | 828 | 850 | 895 | 862 |
| Spannung 200% | 2,9 | 2,6 | 2,5 | 2,7 | 2,5 | 2,4 |
| Spannung 400% | 6,4 | 5,4 | 5,1 | 5,6 | 5,2 | 5,0 |
| Spannung 600% | 11,4 | 9,6 | 9,3 | 10,2 | 9,4 | 9,2 |

| nach der Hydrierung | | | | | | |
|---|---|---|---|---|---|---|
| Streckspannung | 5,0 | 4,9 | 4,7 | 1,6 | 1,5 | 1,5 |
| Reißspannung | 31,0 | 29,8 | 28,1 | 32,3 | 31,0 | 29,6 |
| Reißdehnung (%) | 352 | 381 | 363 | 590 | 615 | 595 |
| Spannung 200 % | 17,5 | 16,9 | 16,5 | 6,5 | 6,2 | 6,0 |
| Spannung 400 % | - | - | - | 15,9 | 15,2 | 14,8 |
| Spannung 600 % | - | - | - | - | 30,2 | - |

## Patentansprüche

1. Thermoplastische elastomere Formmasse auf der Grundlage eines kautschukelastischen Blockcopolymerisats, die durch Hydrierung eines Styrol-Butadien-Blockcopolymerisats aus mindestens einem, einpolymerisierte Einheiten des Styrols aufweisenden, eine Hartphase bildenden Block S und mindestens einem, einpolymerisierte Einheiten sowohl des Styrols wie des Butadiens aufweisenden elastomeren, eine Weichphase bildenden Block (B/S) erhalten worden ist, wobei die Glastemperatur Tg des Blocks S des Styrol-Butadien-Blockcopolymerisats über 25°C und die des unhydrierten Blocks (B/S) unter 25°C lag und das Phasenvolumen-Verhältnis von Block S zu Block B/S so gewählt worden war, daß der Anteil der Hartphase am gesamten Blockcopolymerisat 1 bis 40 Volumen-% und der Gewichtsanteil des Diens weniger als 50 Gew.% betrug.

2. Formmasse nach Anspruch 1, erhalten durch Hydrierung eines Styrol-Butadien-Blockcopolymerisats, dessen Block S eine Glastemperatur T_{g} über 50°C und dessen Block (B/S) eine Glastemperatur T_{g} unter 5°C aufgewiesen hat.

3. Formmasse nach Anspruch 1, dadurch gekennzeichnet, daß α-Methylstyrol, Vinyltoluol oder Diphenylethylen anstelle von Styrol und/oder Isopren anstelle von Butadien verwendet worden sind.

4. Formmasse nach Anspruch 1, dadurch gekennzeichnet, daß als weitere Weichphase ein nicht hydriertes kautschukelastisches Styrol-Butadien-Copolymerisat in untergeordneter Menge vorhanden ist.

5. Formmasse nach Anspruch 4, dadurch gekennzeichnet, daß als Weichphase ein Copolymerisat mit statistischer Verteilung der Comonomeren in mindestens einem Block hydriert worden ist.

6. Formmasse nach Anspruch 1, dadurch gekennzeichnet, daß ein Blockpolymerisat hydriert worden ist, wie es durch anionische Polymerisation erhalten wird, wenn mindestens die Polymerisation des weichen Blocks (B/S) in Gegenwart eines polaren Cosolvens vorgenommen worden ist.

7. Formmasse nach Anspruch 1, dadurch gekennzeichnet, daß ein Blockcopolymerisat mit mehreren Blöcken (B/S) mit unterschiedlicher Molmasse je Molekül hydriert worden ist.

8. Formmasse nach Anspruch 1, dadurch gekennzeichnet, daß ein Blockcopolymerisat mit mehreren Blöcken S mit unterschiedlicher Molmasse je Molekül hydriert worden ist.

9. Formmasse nach Anspruch 1, erhalten durch Hydrierung eines Blockcopolymerisats, dargestellt durch eine oder mehrere der allgemeinen Formeln (1) bis (11)
(1) (S-(B/S))n;
(2) (S-(B/S))ₙ-S;
(3) (B/S)-(S-(B/S))ₙ;
(4) X-[(S-(B/S))ₙ]ₘ₊₁;
(5) X-[((B/S)-S)ₙ]ₘ₊₁;
(6) X-[(S-(B/S))ₙ-S]ₘ₊₁;
(7) X-[((B/S)-S)ₙ-(B/S)]ₘ₊₁;
(8) Y-[(S-(B/S))ₙ]ₘ₊₁;
(9) Y-[((B/S)-S)ₙ]ₘ₊₁;
(10) Y-[(S-(B/S))ₙ-S]ₘ₊₁;
(11) Y-[((B/S)-S)ₙ-(B/S)]ₘ₊₁;
wobei S für Styrol und B/S für den statistisch aus Butadien und Styrol aufgebauten Block steht, X den Rest eines n-funktionellen Initiators, Y den Rest eines m-funktionellen Kopplungsmittels und m und n natürliche Zahlen von 1 bis 10 bedeuten.

10. Formmasse nach Anspruch 1, erhalten durch Hydrierung eines Blockcopolymerisats mit einem den allgemeinen Formeln S-B/S-S, X-[(B/S)-S]₂ und/oder Y-[B/S-S]₂ entsprechenden Block

11. Formmasse nach Anspruch 1, erhalten durch Hydrierung eines Blockcopolymerisats mit einer in Blöcke
(12) (B/S)ₐ-(B/S)_{b};
(13) (B/S)ₐ-(B/S)_{b}-(B/S)ₐ;
(14) (B/S)ₐ-(B/S)_{b}-(B/S)_{c};
unterteilten Weichphase, wobei a, b, c... jeweils verschieden zusammengesetzte Blöcke bedeutet, deren Styrol/Butadien-Verhältnis unterschiedlich sein oder sich innerhalb eines Blocks ändern, insbesondere zunehmen kann, wobei für drei unterschiedliche Teilblöcke (B/S)ₐ, (B/S)_{b} und (B/S)_{c} gilt: (S:B)ₐ<(S:B)_{b}<(S:B)_{c}.

## Claims

1. A thermoplastic elastomeric molding material based on a rubber-elastic block copolymer which has been obtained by hydrogenating a styrene/butadiene block copolymer composed of at least one block S having polymerized units of styrene and forming a hard phase and at least one elastomeric block (B/S) having polymerized units of both styrene and butadiene and forming a soft phase, the glass transition temperature T_{g} of the block S of the styrene/butadiene block copolymer being above 25°C and that of the unhydrogenated block (B/S) being below 25°C and the phase volume ratio of block S to block B/S having been chosen so that the amount of the hard phase in the total block copolymer is from 1 to 40 % by volume and the amount of the diene is less than 50 % by weight.

2. A molding material as claimed in claim 1, obtained by hydrogenating a styrene/butadiene block copolymer whose block S has exhibited a glass transition temperature T_{g} above 50°C and whose block (B/S) has exhibited a glass transition temperature T_{g} below 5°C.

3. A molding material as claimed in claim 1, wherein α-methylstyrene, vinyltoluene or diphenylethylene has been used instead of styrene, and isoprene instead of butadiene.

4. A molding material as claimed in claim 1, wherein an unhydrogenated rubber-elastic styrene/butadiene copolymer is present in a minor amount as further soft phase.

5. A molding material as claimed in claim 4, wherein a copolymer having a random distribution of the comonomers in at least one block has been hydrogenated as the soft phase.

6. A molding material as claimed in claim 1, wherein a block polymer as obtained by anionic polymerization when at least the polymerization of the soft block (B/S) has been carried out in the presence of a polar cosolvent has been hydrogenated.

7. A molding material as claimed in claim 1, wherein a block copolymer having a plurality of blocks (B/S) with different molar masses per molecule has been hydrogenated.

8. A molding material as claimed in claim 1, wherein a block copolymer having a plurality of blocks S with different molar masses per molecule has been hydrogenated.

9. A molding material as claimed in claim 1, obtained by hydrogenating a block copolymer of one or more of the formulae (1) to (11)
(1) (S-(B/S))ₙ;
(2) (S-(B/S))ₙ-S;
(3) (B/S)-(S-(B/S))ₙ;
(4) X-[(S-(B/S))ₙ]ₘ₊₁;
(5) X-[((B/S)-S)ₙ]ₘ₊₁;
(6) X-[(S-(B/S))ₙ₋S]ₘ₊₁;
(7) X-[((B/S)-S)ₙ₋(B/S)]ₘ₊₁;
(8) Y-[(S-(B/S))ₙ]ₘ₊₁;
(9) Y-[((B/S)-S)ₙ]ₘ₊₁;
(10) Y-[(S-(B/S))ₙ₋S]ₘ₊₁;
(11) Y-[((B/S)-S)ₙ₋(B/S)]ₘ₊₁;
where S is styrene and B/S is the block randomly composed of butadiene and styrene, X is a radical of an n-functional initiator, Y is a radical of an m-functional coupling agent and m and n are natural numbers from 1 to 10.

10. A molding material as claimed in claim 1, obtained by hydrogenating a block copolymer having a block of the formula S-B/S-S, X-[(B/S)-S]₂ or Y-[(B/S)-S]₂.

11. A molding material as claimed in claim 1 obtained by hydrogenating a block copolymer having a soft phase divided into blocks
(12) (B/S)ₐ₋(B/S)_{b};
(13) (B/S)ₐ₋(B/S)_{b-}(B/S)ₐ;
(14) (B/S)ₐ₋(B/S)_{b-}(B/S)_{c};
where a, b, c... are blocks each having different compositions, whose styrene/butadiene ratio may be different or may change, in particular increase, within a block, the following being applicable for three different part-blocks (B/S)ₐ, (B/S)_{b} and (B/S)_{c}: (S:B)ₐ<(S:B)_{b}<(S:B)_{c}.

## Revendications

1. Masse à mouler élastomère thermoplastique sur base d'un copolymère séquencé caoutchouteux, qui a été obtenue par hydrogénation d'un copolymère séquencé de styrène et de butadiène constitué d'au moins un bloc S présentant des unités du styrène incorporées par polymérisation et formant une phase rigide et d'au moins un bloc (B/S) présentant des unités incorporées par polymérisation tant du styrène que du butadiène, élastomère et formant une phase souple, la température de transition vitreuse Tᵥ du bloc S du copolymère séquencé de styrène et de butadiène étant supérieure à 25 °C et celle du bloc (B/S) non-hydrogéné étant inférieure à 25 °C et le rapport des volumes de phase du bloc S au bloc B/S ayant été choisi de telle manière que la proportion de la phase rigide au copolymère séquencé total représentait 1 à 40 % en volume et que la proportion en poids du diène était inférieure à 50 % en poids.

2. Masse à mouler selon la revendication 1, obtenue par hydrogénation d'un copolymère séquencé de styrène et de butadiène, dont le bloc S présentait une température de transition vitreuse Tᵥ supérieure à 50 °C et dont le bloc (B/S) présentait une température de transition vitreuse Tᵥ inférieure à 5 °C.

3. Masse à mouler selon la revendication 1, caractérisée en ce qu'on a utilisé de l'α-méthylstyrène, du vinyltoluène ou du diphényléthylène au lieu du styrène et/ou de l'isoprène au lieu du butadiène.

4. Masse à mouler selon la revendication 1, caractérisée en ce qu'un copolymère de styrène et de butadiène caoutchouteux non-hydrogéné est présent en quantités secondaires à titre de phase souple supplémentaire.

5. Masse à mouler selon la revendication 4, caractérisée en ce qu'un copolymère à distribution statistique des comonomères a été hydrogéné dans au moins un bloc à titre de phase souple.

6. Masse à mouler selon la revendication 1, caractérisée en ce qu'un polymère séquencé a été hydrogéné tel qu'il est obtenu par polymérisation anionique lorsque au moins la polymérisation du bloc souple (B/S) a été effectuée en présence d'un cosolvant polaire.

7. Masse à mouler selon la revendication 1, caractérisée en ce qu'un copolymère séquencé à plusieurs blocs (B/S) de différentes masses molaires par molécule a été hydrogéné.

8. Masse à mouler selon la revendication 1, caractérisée en ce qu'un copolymère séquencé à plusieurs blocs S de différentes masses molaires par molécule a été hydrogéné.

9. Masse à mouler selon la revendication 1, obtenue par hydrogénation d'un copolymère séquencé, représentée par une ou plusieurs des formules générales (1) à (11) :
(1) (S-(B/S))ₙ ;
(2) (S-(B/S))ₙ-S ;
(3) (B/S)-(S-(B/S))ₙ ;
(4) X-[(S-(B/S))ₙ]ₘ₊₁ ;
(5) X-[((B/S)-S)ₙ]ₘ₊₁ ;
(6) X-[(S-(B/S))ₙ-S]ₘ₊₁ ;
(7) X-[((B/S)-S)ₙ-(B/S)]ₘ₊₁ ;
(8) Y-[(S-(B/S))ₙ]ₘ₊₁ ;
(9) Y-[((B/S)-S)ₙ]ₘ₊₁ ;
(10) Y-[(S-(B/S))ₙ-S]ₘ₊₁ ;
(11) Y-[((B/S)-S)ₙ-(B/S)]ₘ₊₁ ;
S représentant le styrène et B/S le bloc constitué statistiquement de butadiène et de styrène, X le résidu d'un initiateur à n fonctions, Y le résidu d'un agent de couplage à m fonctions et m et n des nombres naturels de 1 à 10.

10. Masse à mouler selon la revendication 1, obtenue par hydrogénation d'un copolymère séquencé avec un bloc correspondant aux formules générales S-B/S-S, X-[(B/S)-S]₂ et/ou Y-[B/S-S]₂.

11. Masse à mouler selon la revendication 1, obtenue par hydrogénation d'un copolymère séquencé avec une phase souple subdivisée en blocs
(12) (B/S)ₐ-(B/S)_{b} ;
(13) (B/S)ₐ-(B/S)_{b}-(B/S)ₐ ;
(14) (B/S)ₐ-(B/S)_{b}-(B/S)_{c} ;
a, b, c... signifiant à chaque fois des blocs présentant des constitutions différentes dont le rapport styrène/butadiène peut être différent ou peut varier, en particulier augmenter, à l'intérieur d'un bloc, sous condition que pour trois blocs partiels différents (B/S)ₐ, (B/S)_{b} et (B/S)_{c} : (S : B)ₐ < (S : B)_{b} < (S : B)_{c}.
